# EUROPÄISCHE PATENTSCHRIFT

(11) **EP 1 237 273 B1**
(45) Veröffentlichungstag und Bekanntmachung des Hinweises auf die Patenterteilung: **26.10.2005**
(21) Anmeldenummer: 01103725.6
(22) Anmeldetag: 15.02.2001
(51) Int. Cl.: H02P 6/10

(54) **Verfahren zum Vermindern oder Eliminieren des Offset eines elektrischen Wechselsignals**
Method for reducing or eliminating the offset of an ac signal
Méthode pour réduire ou éliminer l'offset d'un signal ac

(43) Veröffentlichungstag der Anmeldung: 04.09.2002
(73) Patentinhaber: GRUNDFOS A/S, DK-8850 Bjerringbro (DK)
(72) Erfinder: Borsting, Hakon, 9530 Stovring (DK)
(74) Vertreter: Vollmann, Heiko

(56) Entgegenhaltungen:
- PATENT ABSTRACTS OF JAPAN vol. 018, no. 017 (E-1488), 12. Januar 1994 (1994-01-12) & JP 05 252785 A (OMRON CORP), 28. September 1993 (1993-09-28)
- PATENT ABSTRACTS OF JAPAN vol. 018, no. 194 (P-1722), 5. April 1994 (1994-04-05) & JP 06 003384 A (NIPPON DENKI KEIKI KENTEISHIYO), 11. Januar 1994 (1994-01-11)

## Beschreibung

Die Erfindung betrifft ein Verfahren zum Vermindern oder Eliminieren des Offset eines Sensors gemäß den im Oberbegriff des Anspruchs 1 angegebenen Merkmalen.

Moderne Elektromotoren sind häufig frequenzumrichtergesteuert. Der Frequenzumrichter selbst weist einen geschlossenen Regelkreis auf um sicherzustellen, dass der Motor mit der Frequenz und gegebenenfalls Spannung angesteuert wird, welche dem gewünschten Betriebspunkt des Motors entspricht. In einer solchen Regelung werden üblicherweise elektrische und/oder magnetische Größen des Motors mittels eines Sensors erfasst, welche in die Regelung als Ist-Wert einfließen. Sensoren dieser Art können beispielsweise ein Hallsensor, ein Strommesser in einem Zweig eines Umrichterarmes oder eine Spule zur Erfassung des Back-EMF-Signals sein. Unabhängig von der Art des Sensors steht am Ausgang regelmäßig ein Wechselsignal an, das mit einem mehr oder weniger großen Offset (Nullpunktverschiebung) behaftet ist. Diese Nullpunktverschiebung führt dazu, dass der Regelung von den Istwerten abweichende Werte zugeführt werden, was typischerweise zu Drehmomentschwankungen führt, die schon bei geringem Offset beträchtlich sein können. Darüber hinaus kann durch ein Offset im Steuersignal für den Motor, also in seiner Strom/Spannungsversorgung, eine vorzeitige Sättigung des magnetischen Flusses erfolgen, wodurch die Leistung des Motors zu geringen Werten hinverschoben wird.

Aus dem Stand der Technik ist Dokument JP 05 252 785 bekannt. Dort wird zum Vermindern der Nullpunktverschiebung eines elektrischen Wechselsignals eines Elektromotors das Signal über eine Periode integriert, dann durch die Periodendauer dividiert und der sich dann ergebende Wert als Größe für die Nullpunktverschiebung zur Korrektur derselben eingesetzt. Alternativ wird dort die Zeit der positiven Halbwelle des Signals mit der Zeit der negativen Halbwelle verglichen und ins Verhältnis gesetzt, wonach der so gewonnene Wert als Korrekturwert für die Nullpunktverschiebung eingesetzt wird.

Zur Verminderung dieses Offset im elektrischen Wechselsignal ist es bekannt, einen Tiefpass einzusetzen. Eine solche Vorrichtung ist beispielsweise aus DE 196 48 696 A1 bekannt. Nachteilig bei dem Einsatz eines solchen Tiefpasses ist es, dass zum einen das Offset nie vollständig entfernt wird und zum anderen je nach gewählter Zeitkonstante des Filters entweder eine sehr langsame Korrektur oder aber eine vergleichsweise große Signalveränderung erfolgt. Auch kann es Probleme durch eine Phasenverschiebung geben.

Vor diesem Hintergrund liegt der Erfindung die Aufgabe zu Grunde, ein Verfahren zum Vermindern oder Eliminieren des Offset zu schaffen, das diese Nachteile vermeidet.

Diese Aufgabe wird gemäß der Erfindung durch die in Anspruch 1 angegebenen Merkmale gelöst. Vorteilhafte Ausgestaltung der Erfindung sind in den Unteransprüchen, der nachfolgenden Beschreibung sowie der Zeichnung angegeben.

Grundgedanke der vorliegenden Erfindung ist es, das Wechselsignal, also beispielsweise das Signal eines im Motor oder Leistungsteil des Frequenzumrichters sitzenden Messensors zunächst über eine vorbestimmte Zeit zu erfassen, über diese Zeit zu integrieren, und die sich dann ergebende Fläche durch die Zeit des Erfassungszeitraumes zu dividieren. Durch das Integrieren wird die Fläche zwischen einer durch den Signalverlauf gebildeten Kurve und der Nulllinie ermittelt, und zwar für den über der Nulllinie liegenden Teil als positiver und für den unter der Nulllinie liegenden Teil als negativer Wert. Da sich bei einem Wechselsignal die positiven und negativen Flächen bei geeigneter Wahl des Erfassungszeitraums zu Null addieren, verbleibt lediglich die das Offset repräsentierende Fläche, wobei sich der konkrete Offsetwert durch entsprechende Zeitdivision ergibt. Das Signal wird dann entsprechend diesem ermittelten Offset korrigiert, beispielsweise durch Aufschalten einer dem Offset vom Betrag her entsprechenden Spannung umgekehrten Vorzeichens, wenn das Signal ein Spannungssignal ist. Da das Signal ein Wechselsignal ist, heben sich beim Integrationsvorgang die über und unter der Nulllinie liegenden Flächen auf, so dass bei fehlendem Offset der Wert Null ermittelt wird. Ist jedoch ein Offset vorhanden, so ergibt der ermittelte Wert dividiert durch die Integrationszeit das Offset nach Betrag und Richtung an.

Das erfindungsgemäße Verfahren setzt allerdings voraus, dass die Integrationszeit so gewählt, wird, dass mindestens fünf oder mehr Perioden der zu erwartenden niedrigsten Frequenz des Signals herangezogen werden, um sicherzustellen, dass auch bei dem niedrigstfrequentesten zu korrigierenden Signal eine möglichst genaue Offsetkorrektur erfolgt ohne die Periodenzeit genau zu kennen und den Anfangszeitpunkt einer Periode zur Einleitung der Messung zu ermitteln.

Andererseits sollte die Integrationszeit auch nicht zu groß gewählt werden, da hierdurch die Schnelligkeit des Verfahrens vermindert wird, was insbesondere dann von Bedeutung ist, wenn ein Signal zu korrigieren ist, das im Bereich der höchsten zu erwartenden Frequenz liegt. Vergleicht man das erfindungsgemäße Verfahren mit dem nach dem Stand der Technik angewandten Verfahren, bei dem ein Tiefpass eingesetzt wird, so wird gemäß der Erfindung zum einen eine wesentlich schnellere zum anderen aber auch genauere Offsetkorrektur erreicht. Es ist eine vollständige Offsetelemination möglich. Darüber hinaus wird das Signal durch die Offsetermittelung anders als beim Tiefpass nicht verändert, sondern erst durch die nachfolgende Offsetkorrektur verschoben.

Zweckmäßigerweise wird die Offsetkorrektur außer Betrieb gesetzt, wenn das Signal eine Frequenz aufweist, die unter der zu erwartenden niedrigsten Frequenz liegt. Hierdurch kann die Offsetkorrektur mit einer vorbestimmten Genauigkeit eingehalten werden. Ein solches Abschalten der Offsetkorrektur im unteren Frequenzbereich ist insbesondere dann hinnehmbar, wenn der Elektromotor zum Antrieb einer Kreiselpumpe, beispielsweise einer Heizungsumwälzpumpe eingesetzt wird, da ein gegebenenfalls vorhandenes Offset in diesem niedertourigen Bereich, in dem vom Aggregat kaum Leistung gefordert wird, praktisch keine Rolle spielt. Bei Kreiselpumpenaggregaten werden solche niedrigen Frequenzen nur beim Anfahren oder Auslaufen durchfahren. Diese Betriebszustände sind allerdings selten, kurzzeitig und für den Regelbetrieb der Anlage ohne Bedeutung. Bei diesem Einsatz ist es meist zweckmäßiger, die niedrigste Frequenz, für welche die Offsetkorrektur arbeiten soll, anzuheben, und dafür die Anzahl der Perioden, die innerhalb der Integrationszeit durchlaufen werden, zu vergrößern oder aber die Integrationszeit zu verkleinern, um die Regelgeschwindigkeit der Offsetkorrektur zu erhöhen. Auch kann bei einer Integrationszeit, die mindestens fünf oder mehr Perioden des Signals umfasst, die Integrationszeit praktisch an beliebiger Stelle des Signalverlaufs begonnen werden, ohne das Ergebnis merklich zu beeinflussen. Es wird also zweckmäßigerweise die Integrationszeit an die Drehfrequenz des Elektromotors angepasst, und zwar insbesondere an die Drehzahlbereiche, die für den bestimmungsgemäßen Betrieb des Motors im Hinblick auf die Offsetkorrektur besonders relevant sind.

Anders als bei der Tiefpassfilterung muss bei dem erfindungsgemäßen Verfahren nach dem Integrieren und Dividieren ein Halteglied vorgesehen sein, das den nach dem Intervall ermittelten Offsetwert bis zur Ermittlung des nächsten Offsetwertes hält und das Signal entsprechend korrigiert. Um unkontrollierte Schwingungen des Systems zu vermeiden, kann es zweckmäßig sein, dem Halteglied einen Tiefpass nachzuschalten, bevor das Offsetsignal dem Signal subtrahierend aufgeschaltet wird.

Mit dem erfindungsgemäßen Verfahren kann grundsätzlich jedes Offset in einem Wechselsignal entfernt werden. Bevorzugt wird das Verfahren jedoch eingesetzt, um ein Sensorsignal zu korrigieren, wobei der Sensor elektrische oder magnetische Größen von Motor und/oder Leistungskreis des Frequenzumrichters erfasst und in die Regelung des Frequenzumrichters eingebunden ist.

Die Erfindung ist nachfolgend anhand eines in der Zeichnung dargestellten Ausführungsbeispieles im Einzelnen erläutert. Es zeigen
- Figur 1: ein Prinzipschaltbild einer Vorrichtung zum Ausführen des erfindungsgemäßen Verfahrens,
- Figur 2a: ein Prinzipschaltbild einer Vorrichtung nach dem Stand der Technik und ein zugehöriger Signalverlauf,
- Figur 2b: ein Prinzipschaltbild einer weiteren Vorrichtung nach dem Stand der Technik und ein Signalverlauf und
- Figur 2c: ein Prinzipschaltbild gemäß Figur 1 und der dazugehörige Signalverlauf

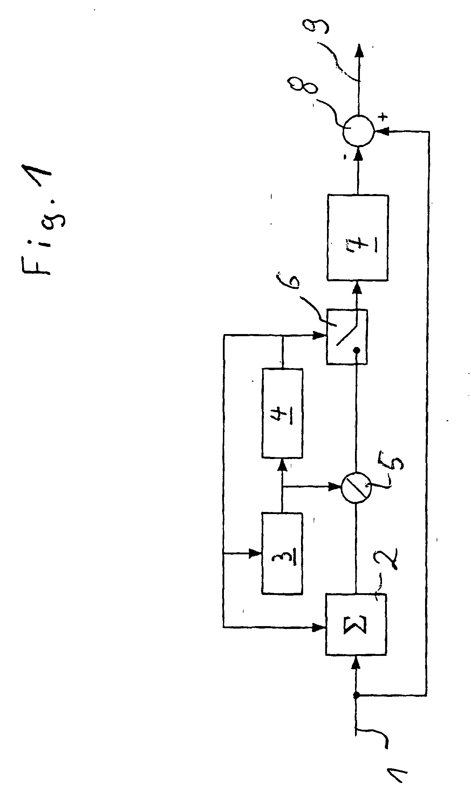

Das in Figur 1 dargestellte Blockschaltbild zeigt eine Vorrichtung zur Offsetkorrektur nach dem erfindungsgemäßen Verfahren. Ein zu korrigierendes, mit Offset behaftetes Eingangssignal 1 in Form eines Wechselspannungssignals wird einem Integrator 2 zugeführt. Der Intergrator 2 ermittelt die zwischen einer durch das Signal gebildeten Kurve und einer Nulllinie gebildeten Flächen und summiert diese über eine Integrationszeit t. Gesteuert wird der Integrator 2 über ein Zeitglied bestehend aus einem Timer 3 und einem Komparator 4, der beim Erreichen der vorbestimmten Integrationszeit t sowohl den Timer 3 als auch den Integrator 2 zurücksetzt.

Der Ausgang des Integrators 2 ist ebenso wie der des Timers 3 mit einem Verknüpfungsglied 5 verbunden, welches die Ausgangssignale von Integrator 2 und Timer 3 so miteinander verknüpft, dass am Ausgang des Verknüpfungsglied 5 ein dem Offset des Eingangssignals 1 entsprechendes Signal ansteht. Innerhalb des Verknüpfungsglied 5 wird also die im erfindungsgemäßen Verfahren vorgesehene Division der im Integrator 2 ermittelten Fläche durch die vom Timer 3 vorgegebene Integrationszeit durchgeführt.

Das Ausgangssignal des Verknüpfungsglieds 5 steht konstant an einem Schalter 6 an, der ebenfalls durch den Komparator 4 gesteuert ist. Der Schalter 6 wird erst dann geschlossen, wenn die vorbestimmte Integrationszeit t erreicht ist. Dann wird das aktuelle Ausgangssignal des Verknüpfungsglieds 5, also das nach Ablauf der Integrationszeit t, einem Halteglied 7 zugeführt, an dessen Ausgang ein Signal ansteht, das dem des während der letzten Integrationszeit t ermittelten Offset entspricht. Der Ausgang des Halteglieds 8 ist mit einem Korrekturglied 8 verbunden, dem auch das Eingangssignal 1 aufgeschaltet ist. Innerhalb des Korrekturglieds 8 wird das vom Halteglied 7 kommende, das Offset repräsentierende Signal auf das Eingangssignal 1 subtrahierend geschaltet, wodurch das Offset im Idealfall eliminiert wird. Am Ausgang des Korrekturglieds 8 steht dann ein offsetkorrigiertes Ausgangssignal 9 an.

Die Integrationszeit t sollte, wie Eingangs bereits erwähnt ist, so gewählt sein, dass sie mindestens fünf Perioden des Eingangssignals 1 umfasst. Wenn die Vorrichtung für ein Eingangssignal mit stark wechselnder Frequenz ausgelegt werden soll, so ist die Integrationszeit t auf die kleinste Frequenz abzustimmen, bei der die Offsetkorrektur noch arbeiten soll. Bei Antrieben für Pumpenaggregate, insbesondere Heizungsumwälzpumpen reicht es in der Regel aus, die Offsetkorrektur für die den Betriebsdrehzahlen entsprechenden Frequenzen auszulegen, da beim Anfahren und Auslaufen des Motors eine solche in der Regel entbehrlich ist. Stattdessen kann hierfür die Korrekturzeit deutlich verkürzt und/oder die Anzahl der Perioden, die in während der Integrationszeit erfasst werden, erhöht werden. Insbesondere letzteres führt dazu, dass die Integrationszeit praktisch phasenunabhängig vom Signal gewählt werden kann, so wie es auch bei der anhand von Figur 1 beschriebenen Vorrichtung erfolgt.

Beträgt die Integrationszeit jedoch nur fünf oder noch weniger Perioden, wie aus dem Stand der Technik bekannt, so ist es zweckmäßig, die Intergrationszeit mit dem Eingangssignal zu synchronisieren, so dass die Intergration beispielsweise im Scheitelpunkt der durch das Signal gebildeten Kurve beginnt und auch dort wieder endet. So kann die Offseterfassung auch bei niedrigen Frequenzen bzw. kurzen Intergrationszeiten sichergestellt werden.

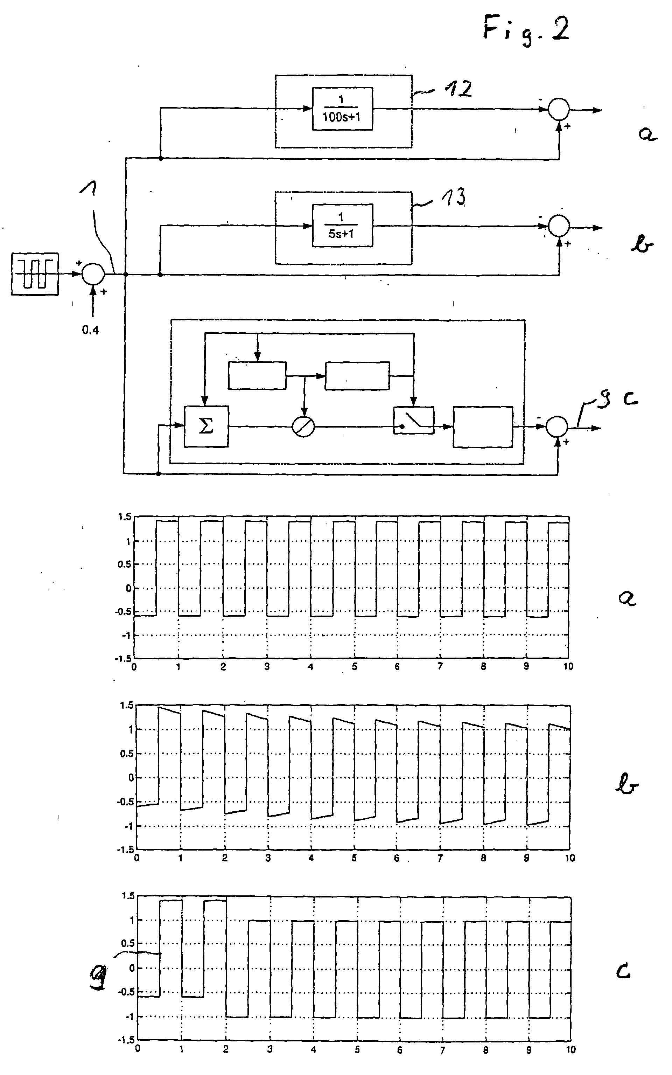

In Figur 2 ist anhand eines Rechtecksignals die Offsetkorrektur nach dem Stand der Technik (Figur 2a und 2b) sowie gemäß der Erfindung (Figur 2c) dargestellt. Das Eingangssignal 1 besteht aus einem Rechtecksignal 10, dem ein Offset 11 von 0,4 hinzugefügt worden ist

Gemäß Figur 2a ist ein Tiefpass 12 mit einer Zeitkonstante von 100 Sekunden vorgesehen. Wie sich aus dem zugehörigen Kurvenverlauf, der das Ausgangssignal zeigt, ergibt, wird mit einem Tiefpass 12 zwar das Signal als solches (hier ein Rechtecksignal) praktisch nicht verändert, die Offsetkorrektur erfolgt jedoch nur sehr langsam. Am Ende des im Diagram dargestellten Zeitraums, also nach zehn Perioden ist diese noch nicht annähernd abgeschlossen.

Bei dem anhand von Figur 2b dargestellten Tiefpass 13 der einer Zeitkonstante von fünf Sekunden aufweist, erfolgt die Offsetkorrektur, wie das zugehörige Diagram verdeutlicht, zwar wesentlich schneller, es ist nach etwa zehn Perioden durchgeführt, es hat jedoch den erheblichen Nachteil, dass das Signal selbst verändert wird. Wie aus dem Diagram gemäß Figur 2b sichtbar ist, ist das Rechtecksignal im Bereich seiner maximalen und minimalen Amplituden nicht mehr konstant, sondern verändert.

Mit dem erfindungsgemäßen Verfahren hingegen, dessen vorrichtungsmäßiger Aufbau anhand von Figur 1 beschrieben worden ist und das anhand von Figur 2c dargestellt ist, ist die Offsetkorrektur bereits nach zwei Perioden vollständig abgeschlossen. Der Signalverlauf entspricht dem des Eingangssignals 1. Wie die Diagrame gemäß Figur 2a, b und c verdeutlichen, ist das erfindungsgemäße Verfahren nicht nur erheblich schneller als die Offsetkorrektur mittels Tiefpass nach dem Stand der Technik, sondern darüber hinaus wird das Signal trotz dieser schnellen Korrektur nicht verändert, sondern nur zum Zweck der Offsetkorrektur verschoben.

### Bezugszeichenliste

- 1 -: Eingangssignal
- 2 -: Integrator
- 3 -: Timer
- 4 -: Komparator
- 5 -: Verknüpfungsglied
- 6 -: Schalter
- 7 -: Halteglied
- 8 -: Korrekturglied
- 9 -: Ausgangssignal
- 10 -: Rechtecksignal
- 11 -: Offset
- 12 -: Tiefpass
- 13 -: Tiefpass
- t -: Integrationszeitraum

## Patentansprüche

1. Verfahren zum Vermindern oder Eliminieren der Nullpunktverschiebung eines elektrischen Wechselsignals, insbesondere des Sensorsignals eines elektronischen Konverters/Inverters eines Elektromotors, bei dem das Signal über eine Zeit integriert und dann durch diese Zeit dividiert wird, wobei der sich dann ergebende Wert die Größe der zu korrigierenden Nullpunktverschiebung repräsentiert und das Signal entsprechend korrigiert wird, **dadurch gekennzeichnet, dass**
- eine niedrigste Frequenz festgelegt wird, bei der die Korrektur der Nullpunktverschiebung außer Betrieb gesetzt wird,
- und daß die Integrationszeit mindestens Fünf oder mehr Perioden dieser niedrigsten Frequenz beträgt.

2. Verfahren nach Anspruch 1, **dadurch gekennzeichnet, dass** die Korrektur der Nullpunktverschiebung bei Unterschreiten einer vorbestimmten Frequenz des Wechselsignals außer Betrieb gesetzt wird.

3. Verfahren nach einem der vorhergehenden Ansprüche, **dadurch gekennzeichnet, dass** die Integrationszeit an die Drehfrequenz des Elektromotors angepasst wird, derart, dass die Integrationszeit mit wachsender Drehfrequenz des Motors verringert wird und umgekehrt.

4. Verfahren nach einem der vorhergehenden Ansprüche, **dadurch gekennzeichnet, dass** das ermittelte Signal zur Korrektur der Nullpunktverschiebung einem Halteglied zugeführt wird, dessen Ausgang subtrahierend dem Sensorsignal aufgeschaltet wird.

5. Verfahren nach einem der vorhergehenden Ansprüche, **dadurch gekennzeichnet, dass** das ermittelte Signal zur Korrektur der Nullpunktverschiebung einem Halteglied zugeführt wird, dessen Ausgang unter Zwischenschaltung eines Tiefpasses subtrahierend dem Sensorsignal aufgeschaltet wird.

6. Verfahren nach einem der vorhergehenden Ansprüche, **dadurch gekennzeichnet, dass** es zur Korrektur der Nullpunktverschiebung eines den Strom in einem Arm eines Wechselrichters eines Frequenzumrichters erfassenden Sensors eingesetzt wird.

## Claims

1. A method for reducing or eliminating the zero offset of an electrical alternating signal, in particular of the sensor signal of an electronic converter/inverter of an electric motor, with which the signal is integrated over a time and is then divided by this time, wherein the value which then results represents the size of the zero offset to be corrected, and the signal is corrected accordingly, **characterised in that**
- a lowest frequency is fixed, at which the correction of the zero offset is made inoperative,
- and that the integration time is at least five or more periods of this lowest frequency.

2. A method according to claim 1, **characterised in that** the correction of the zero offset is made inoperative on falling below a predefined frequency of the alternating signal.

3. A method according to one of the preceding claims, **characterised in that** the integration time is adapted to the rotational frequency of the electric motor in a manner such that the integration time is reduced with a growing rotational frequency of the motor, and vice versa.

4. A method according to one of the preceding claims, **characterised in that** the evaluated signal for the correction of the zero offset is led to a holding element whose output is connected to the sensor signal in a subtractive manner.

5. A method according to one of the preceding claims, **characterised in that** the evaluated signal for the correction of the zero offset is led to a holding element whose output, amid the intermediate connection of a low-pass filter, is connected to the sensor signal in a subtractive manner.

6. A method according to one of the preceding claims, **characterised in that** it is used for the correction of the zero offset of a sensor detecting the current in one arm of an inverter of a frequency converter.

## Revendications

1. Procédé pour réduire ou éliminer le décalage du point zéro d'un signal alternatif électrique, en particulier du signal de capteur d'un convertisseur/inverseur électronique d'un moteur électrique, dans lequel le signal est intégré en fonction d'une période de temps et divisé ensuite par cette période de temps, la valeur qui en résulte représentant alors la grandeur du décalage du point zéro à corriger et le signal étant corrigé en conséquence, **caractérisé en ce que**
une fréquence la plus faible est définie, à laquelle la correction du décalage du point zéro est mise hors service,
et **en ce que** la durée d'intégration représente au moins cinq périodes ou plus de cette fréquence la plus faible.

2. Procédé selon la revendication 1, **caractérisé en ce que** la correction du décalage du point zéro est mise hors service en cas de passage sous une fréquence prédéfinie du signal alternatif.

3. Procédé selon l'une des revendications précédentes, **caractérisé en ce que** la durée d'intégration est adaptée à la fréquence de rotation du moteur électrique, de telle sorte que la durée d'intégration diminue lorsque la fréquence de rotation du moteur croît et inversement.

4. Procédé selon l'une des revendications précédentes, **caractérisé en ce que** le signal émis est, pour la correction du décalage du point zéro, appliqué à un élément de retenue, dont la sortie est connectée par soustraction sur le signal de capteur.

5. Procédé selon l'une des revendications précédentes, **caractérisé en ce que** le signal émis est, pour la correction du décalage du point zéro, appliqué à un élément de retenue, dont la sortie est connectée avec interprétation d'un filtre passe-bas, par soustraction sur le signal de capteur.

6. Procédé selon l'une des revendications précédentes, **caractérisé en ce qu'**il est utilisé pour la correction du décalage du point zéro d'un capteur enregistrant le courant dans un bras d'un onduleur d'un convertisseur de fréquence.
